## Europäisches Patentamt
## European Patent Office
## Office européen des brevets

(19)

(11) Veröffentlichungsnummer: **0 292 876**

**A1**

(12) **EUROPÄISCHE PATENTANMELDUNG**

(21) Anmeldenummer: **88108041.0**

(22) Anmeldetag: **19.05.88**

(51) Int. Cl.4: **B60R 22/42**

(30) Priorität: **25.05.87 DE 3717559**

(43) Veröffentlichungstag der Anmeldung:
**30.11.88 Patentblatt 88/48**

(84) Benannte Vertragsstaaten:
**DE FR GB**

(71) Anmelder: **BRITAX-KOLB GMBH & CO**
**Theodor-Heuss-Strasse 2**
**D-8060 Dachau(DE)**

(72) Erfinder: **Knabel, Walter, Dr.**
**Nockstrasse 13**
**D-8110 Murnau(DE)**
Erfinder: **Mayer, Josef**
**Möslweg 2**
**D-8065 Erdweg(DE)**
Erfinder: **Lochbihler, Edmund**
**Theodor-Lipps-Strasse 15**
**D-8000 München 50(DE)**

(74) Vertreter: **Görg, Klaus, Dipl.-Ing. et al**
**Hoffmann, Eitle & Partner Arabellastrasse 4**
**(Sternhaus)**
**D-8000 München 81(DE)**

(54) **Mehrstufig und insbesondere zweistufig wirksamer Klemmer für ein Sicherheitsgurtsystem.**

(57) Die Erfindung bezieht sich auf einen zweistufig wirksamen Klemmer, der in der ersten Stufe mit einem beweglichen Klemmkeil (18) ein schonende, deblockierbare Klemmung hervorruft. Der Klemmkeil bewegt sich dabei entlang einer ersten Wegstrecke. Bei einer höheren Gurtbandabzugskraft in der Richtung des Pfeiles (A) beaufschlagt der Klemmkeil (18) ein weiteres bewegliches Klemmteil (62), so daß dadurch bei einer Bewegung entlang einer weiteren Wegstrecke das Gurtband (12) kraft- und form-schlüssig, deblockierbar für den Crash-Fall geklemmt wird.

Fig.1a

## Zweistufig wirksame Klemmeinrichtung für ein Sicherheitsgurtsystem

Die Erfindung bezieht sich auf eine zweistufig wirksame Klemmeinrichtung für ein Sicherheitsgurtsystem gemäß dem Oberbegriff des Anspruchs 1 bzw. 13.

Eine derartige Klemmeinrichtung ist aus der DE 34 12 383 AI bekannt. Diese Klemmeinrichtung ist als Umlenkklemmer ausgebildet, bei dem die Klemmflächen an einem schwenkbar gelagerten Hebel ausgebildet sind, der durch die Gurtumlenkkraft betätigt wird, um sich über eine erste und eine zweite Wegstrecke zu bewegen.

Aus der DE 34 21 837 AI ist eine Klemmeinrichtung bekannt, bei der außerhalb eines Umlenkbereiches ein Klemmteil mit mehreren, unterschiedlich wirksamen Klemmflächen auf das Gurtband einwirkt, und zwar in Abhängigkeit von der Gurtzugkraft. Der einteilige Hebel ist schwenkbar gelagert, wobei die Gurtbandbewegung selbst eine Lageränderung des Schwenkhebels oder einer Drehscheibe bewirkt, so daß mit zunehmender Gurtzugkraft zunächst ein gummielastisches Reibteil und bei höherer Zugkraft eine zunehmend aggressiv wirkende Klemmfläche in Eingriff mit dem Gurtband gelangt.

Aus der DE-OS 22 59 692 ist eine Klemmeinrichtung bekannt, die als Klemmkeil ausgebildet ist, der durch ein Trägheitspendel mit seiner Klemmfläche in Anlage an das Gurtband gebracht wird. Dieser Klemmkeil ist mit einem vorspringenden Zacken versehen, der nach der Klemmphase eine Reißphase einleitet, in der die Klemmwirkung weitgehend ausgeschaltet wird. Die Klemmphase wird dadurch ausgelöst, daß durch das Trägheitspendel der Klemmkeil an das Gurtband herangebracht wird. Nimmt die Kraft am Gurtband einen für den menschlichen Körper gerade noch erträglichen Wert an, so verschiebt sich der Klemmkeil unter Festhalten des Gurtbandes so, daß die zackenartige Erhebung in das Gurtband eindringt. Steigt dann die Gurtkraft noch weiter an, dann reicht die Haltekraft der zackenartigen Erhebung nicht mehr aus, um das Gurtband festzuhalten, worauf dieses ausgezogen und durch die eingreifende zackenartige Erhebung unter Leistung von Reißarbeit und dadurch bedingte Energieabsorption aufgetrennt wird. Der Klemmkeil ist dabei mit der eigentlichen Klemmfläche nicht mehr wirksam mit dem Gurtband in Verbindung. Die zackenartige Erhebung liegt dann zur Hubbegrenzung des Klemmkeils an einer Nase des Gehäuses an.

Der FR-PS 2 511 320 ist eine Klemmeinrichtung im Zusammenhang mit einer Aufrollautomatik zu entnehmen. Die Klemmeinrichtung besteht insbesondere aus einem sich drehenden, im Gehäuse gelagerten Teil, welches geschlitzt ist. Durch diesen Schlitz verläuft für den normalen Fahrbetrieb ungehindert das Gurtband. Wenn sich das Gehäuse der Aufrollautomatik aufgrund einer Sperrung derselben bewegt, so wird dadurch eine Drehung des drehbar gelagerten Teils hervorgerufen und dadurch der Verlauf des Gurtbandes verformt und somit eine Klemmwirkung hervorgerufen.

Ein zweistufiger Klemmer kann bereits bei einer vorgegebenen fahrzeugsensitiven Verzögerung oder Beschleunigung von 0,45 g und einer entsprechenden gurtbandsensitiven Beschleunigung von 1,5 g wirksam werden, indem bei dieser Klemmung ein schonender Eingriff zwischen den Klemmelementen und dem Gurtband erfolgt, da die entsprechenden Klemmflächen einen sicheren, aber - schonenden Eingriff gewährleisten, der nicht durch Kräfte belastet ist, wie sie sich im Zusammenhang mit dem Crash-Fall ergeben, d.h. bei höheren Beschleunigungen bzw. Verzögerungen.

Die Aufgabe der Erfindung besteht darin, eine derartige Klemmeinrichtung bei optimal einfachem Aufbau und guter Funktionsweise im Bereich des Linearverlaufs des Gurtbandes einsetzen zu können.

Diese Aufgabe wird erfindungsgemäß durch die Merkmale des Anspruchs 1 bzw. des Anspruchs 13 gelöst.

Bei dieser Lösung erfolgt ähnlich wie beim Stand der Technik eine zweistufige Klemmung dahingehend, daß in der ersten Stufe eine - schonende Klemmung dahingehend erfolgt, daß diese Klemmung nicht selbsthemmend ist, d.h. also bei Beschleunigungen und Verzögerungen außerhalb des Crash-Falles auf das Gurtband derart einwirkt, daß das Gurtband weitgehend unbeeinträchtigt bleibt. In der zweiten Stufe kann dann im Zusammenhang mit einer gezielt einleitbaren Verformung des Gurtbandes gleichzeitig ein Klemmeingriff auf das Gurtband erfolgen, der selbsthemmend ist und eine Weiterverwendung des Gurtbandes unnötig macht.

Hierzu ist eine Zweiteilung der Klemmelemente dahingehend vorgesehen, daß jedes der Klemmelemente, d.h. Klemmteil und Klemmglied jeweils mit einer der Klemmflächen versehen ist, mit der Folge, daß das Klemmteil als schonend wirksames Klemmelement in der ersten Klemmphase eine erste Wegstrecke alleine zurücklegt und dann gezielt nach dieser ersten Wegstrecke für eine zweite Wegstrecke, das für die zweite Klemmphase, den Verlauf des Gurtbandes verformend, wirksam wird, mitnimmt, wobei das Gurtband über das Klemmteil die den Verlauf des Gurtbandes verformende Klemmkraft auf das Klemmglied überträgt.

In vorteilhafter Weiterbildung ist das Klemmglied Teil einer Zugstrebe, durch die das Gurtband verläuft, so daß ein mit dem Klemmteil am Ende dessen erster Wegstrecke in Berührung gelangender Teil der Zugstrebe auf derselben Seite des Gurtbandes sich befindet wie das erste Klemmteil, und so daß das Klemmglied sich auf der anderen Seite des Gurtbandes befindet und derart in Richtung auf das Gurtband und das Klemmteil oder ein gesondertes ortsfestes Gegendruckteil zwangsgeführt ist, daß eine Verformung des Gurtbandes im Klemmeingriff zwischen dem Klemmteil oder dem Gegendruckteil und dem Klemmglied erfolgt, wenn sich Zugstrebe und Klemmteil entlang über die zweite Wegstrecke bewegen.

Bei dieser weitergebildeten Ausführungsvariante ist das Klemmglied der Zugstrebe entlang einer stationären Gleitführung bewegbar, die in einem Winkel zur Gurtbandabzugsrichtung in diese Richtung und auf das Gurtband zu verläuft. Das Klemmteil ist dabei als ein zumindest für die zweite Wegstrecke entlang einer Gleitschiene bewegbarer Klemmkeil ausgebildet. In diesem Zusammenhang ist die Winkeleinstellung sehr wichtig. Die Winkeleinstellung soll so erfolgen, daß in jedem Fall das bereits erwähnte automatische Deblockieren im Crash-Fall oder nach dem Crash-Fall nicht erfolgen kann. Insbesondere ist der Winkel zwischen der Gurtbandverlaufsrichtung und der Gleitfläche der Gleitführung größer oder gleich dem Winkel zwischen der Gurtbandverlaufsrichtung und der Gleitfläche der Gleitschiene.

Vorteilhafterweise hat die Gleitschiene eine 2-stufige Gleitfläche dahingehend, daß sich in Abzugsrichtung des Gurtbandes eine Folgegleitfläche anschließt, die in einem Winkel zur Abzugsrichtung des Gurtbandes liegt, der kleiner als der Winkel zwischen der Gleitfläche und der Abzugsrichtung des Gurtbandes ist, und daß entsprechend angepaßt auch die korrespondierende Gleitfläche des Klemmteiles 2-stufig ist. Dies hat den Vorteil, daß dann, wenn die Klemmkraft zu groß wird, ab dem Gleitflächensprung bei weiterer Bewegung des Klemmteiles eine Reduzierung der Zunahme der Klemmkraft erzielt werden kann. Dadurch wird wirksam verhindert, daß möglicherweise das Gurtband soweit zerstört wird, daß die erforderliche Haltefunktion nicht mehr gewährleistet ist. Über die zweite Wegstrecke ist somit ein langer Weg möglich, ohne daß die Klemmkraft ungewollt stark erhöht wird.

Entsprechend einer weiteren Ausgestaltung der Erfindung weist das gesonderte Gegendruckteil seitlich außerhalb des Verformungsweges des Gurtbandes mindestens, aber vorzugsweise jeweils an einer Seite einen Vorsteuernocken auf, an dem das Klemmglied der Zugstrebe während der Gurtbandverformung ohne Einklemmen des Gurtbandes entlanggleitbar ist. Außerdem kann sich das Klemmglied dadurch zusammen mit dem Gurtband nicht am gesonderten Gegendruckteil hemmen, was dazu führt, daß der Verformungs- und Klemmeingriff leichter und ungehinderter vollzogen werden kann.

Das gesonderte Gegendruckteil bildet insbesondere eine Ausnehmung, die das Klemmglied der Zugstrebe zusammen mit dem verformten Gurtband formschlüssig aufnimmt.

Damit ein Einklemmen des Gurtbandes während des Verformungsvorganges durch das Klemmglied vermieden wird, weist auch das Klemmglied der Zugstrebe seitlich außerhalb des Verformungsweges des Gurtbandes seitlich des Gurtbandverlaufes vorstehende Nocken auf, die mit den Vorsteuernocken des gesonderten Gegendruckteils zusammenwirken. Dadurch erfolgt eine gezielte Einsteuerung des Klemmglieds der Zugstrebe in die genannte Ausnehmung des gesonderten Gegendruckteils, ohne daß einerseits das Gurtband dabei eingeklemmt wird und dadurch eine Hemmung erfolgt.

Entsprechend einer vorteilhaften Weitergestaltung der Lösungs ist das Klemmglied als drehbares Teil ausgebildet, durch welches das Gurtband verläuft. Dabei ist dieses Teil während der zweiten Wegstrecke durch das Klemmteil bei Verformung des Gurtbandes drehbar.

In beiden Fällen verklemmen sich die Teile durch die entsprechende Zuordnung und die eingenommene Endlage unter Verformung des Gurtbandes so, daß die dadurch entstehende Klemmblockierung sich selbst nicht mehr lösen kann, insbesondere wenn die genannten Flächen in der entsprechenden Winkelzuordnung angeordnet sind und wenn die das Drehteil verdrehenden Mitnehmer des Klemmteils in einer entsprechenden Zuordnung angeordnet sind.

Das drehbare Teil weist einen Mitnahmeanschlag auf, der mit einem Mitnehmer des Klemmteils in Berührung bringbar ist, so daß bei der genannten Bewegung des Klemmteils eine Verdrehung des drehbaren Teils unter Verformung des Gurtbandes erfolgt.

Entsprechend einer weiteren Ausführungsvariante gemäß Anspruch 13 ist das Riegelteil von einer in Gurtbandauszugsrichtung bewegbaren Gegendruckwange gebildet. Außerdem kann in dem Klemmteil eine Ausnehmung ausgebildet sein, in die das Riegelteil zusammen mit einem Abschnitt verformten Gurtband eindringt.

Insbesondere bei der Herstellung des Kraft- und Formschluß-Klemmeingriffes im Crash-Fall besteht ein Problem dahingehend, daß infolge des zunehmenden Gurtbandabzuges nach dem ersten Klemmen das Gurtband zwischen Aufroller und Klemmer derart strammt, daß möglicherweise die Kraft im Gurtband so groß wird, daß die den Verlauf des Gurtbandes bewirkende Verformung nicht mehr vollständig durchgeführt werden kann. Dies wird vorteilhafterweise dadurch vermieden, daß während der Herstellung dieser Verformung auf der Seite des Gurtbandaufrollers eine Lockerung des Gurtbandes durchgeführt wird.

Insbesondere bei Verwendung eines Hubautomaten, durch den eine Hubbewegung der Aufrollwelle im gesperrten Zustand ausgenutzt wird, über einen Steuerbügel das Klemmteil in Klemmanlage an das Gurtband zu bringen, ist aufgrund eines Gleitflächensprungs zwischen dem Steuerbügel und dem ersten Klemmelement eine weitere Hubbewegung möglich, was zu einer plötzlichen Lockerung des Gurtbandes in diesem Bereich führt.

Die Erfindung wird nachfolgend anhand einiger, in den Zeichnungen rein schematisch dargestellter Ausführungsbeispiele näher erläutert. Es zeigt:

Fig. 1a eine schematische Ansicht eines zweistufigen Klemmers für ein Sicherheitsgurtsystem in der Nichtklemmstellung,

Fig. 1b eine schematische Ansicht des Klemmers gemäß Fig. 1a in der zweiten Klemmstellungsstufe,

Fig. 1c eine schematische Ansicht eines gegenüber der Ausführungsform in Fig. 1a und 1b leicht abgewandelten Ausführungsform des 2-stufigen Klemmers für ein Sicherheitsgurtsystem in der Ruhestellung,

Fig. 1d eine schematische Ansicht des Klemmers gemäß Fig. 1c mit der Darstellung einer ersten Klemmstufe,

Fig. 1e eine schematische Ansicht des Klemmers gemäß Fig. 1c mit der Darstellung des Endes der ersten Klemmstufe,

Fig. 1f eine schematische Ansicht des Klemmers der Fig. 1c mit der Darstellung des Beginns der zweiten Klemmstufe,

Fig. 1g eine schematische Ansicht des Klemmers der Fig. 1c mit der Darstellung eines Übergangszustandes der zweiten Klemmstufe,

Fig. 1h eine schematische Ansicht des Klemmers gemäß Fig. 1c mit der Darstellung des Endzustandes der dritten Klemmstufe,

Fig. 2a eine schematische Ansicht einer anderen Ausführungsform eines Klemmers in der Nichtklemmstellung,

Fig. 2b eine schematische Ansicht des Klemmers gemäß Fig. 2a in der zweiten Klemmstellungsstufe,

Fig. 3a eine schematische Ansicht einer weiteren Ausführungsform eines Klemmers in der Nichtklemmstellung und

Fig. 3b eine schematische Ansicht des in Fig. 4a dargestellten Klemmers in der zweiten Klemmstellungsstufe.

Der Klemmer aller Ausführungsvarianten umfaßt folgende wesentliche, gemeinsame Elemente.

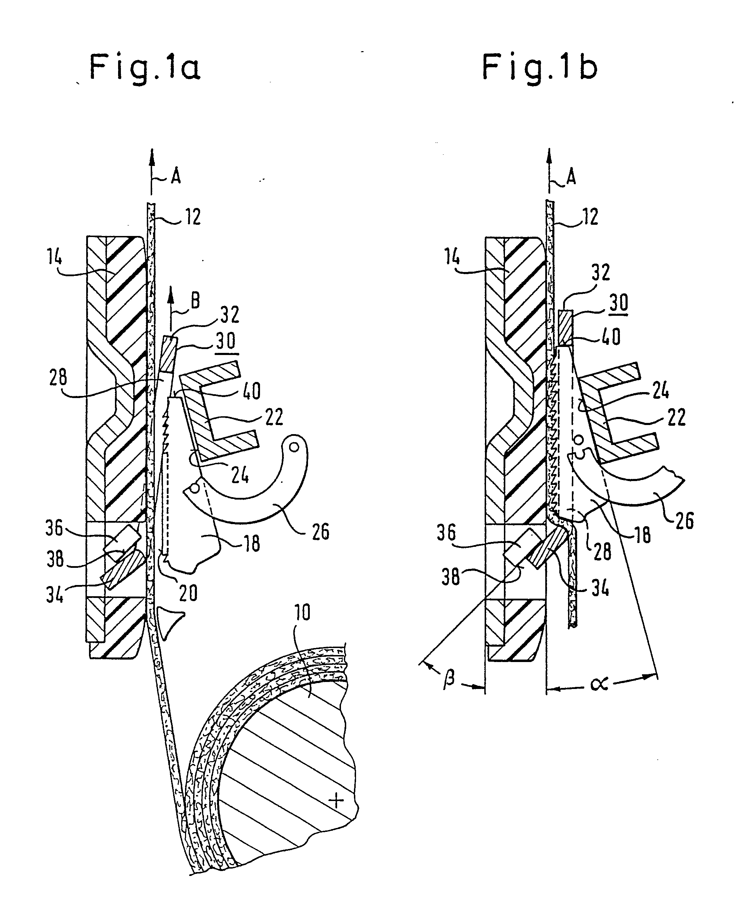

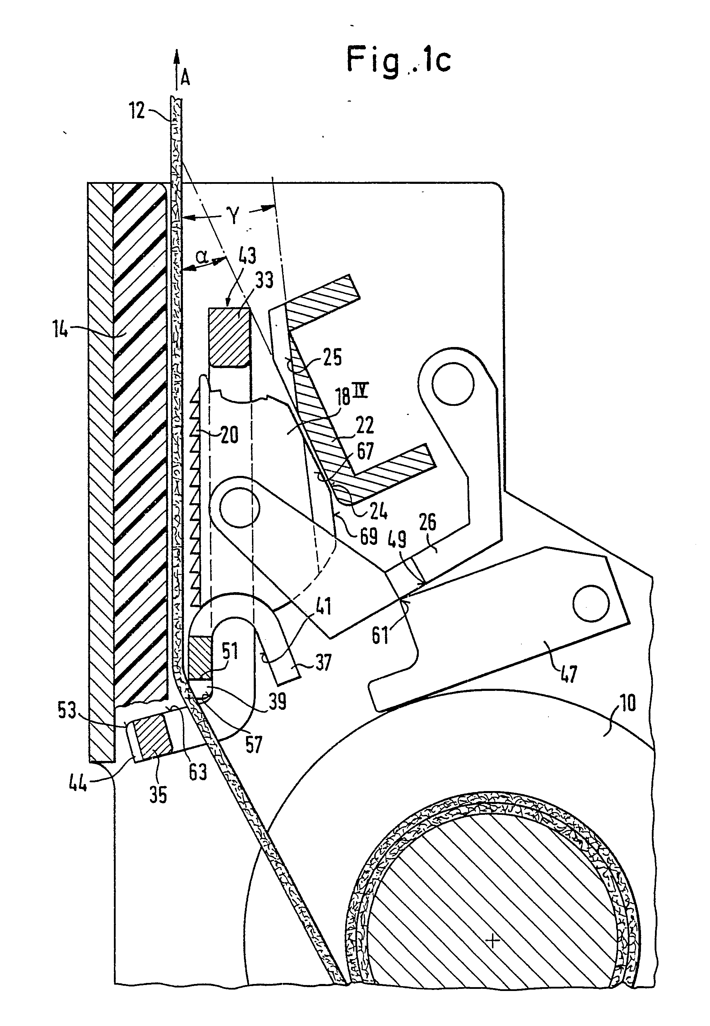

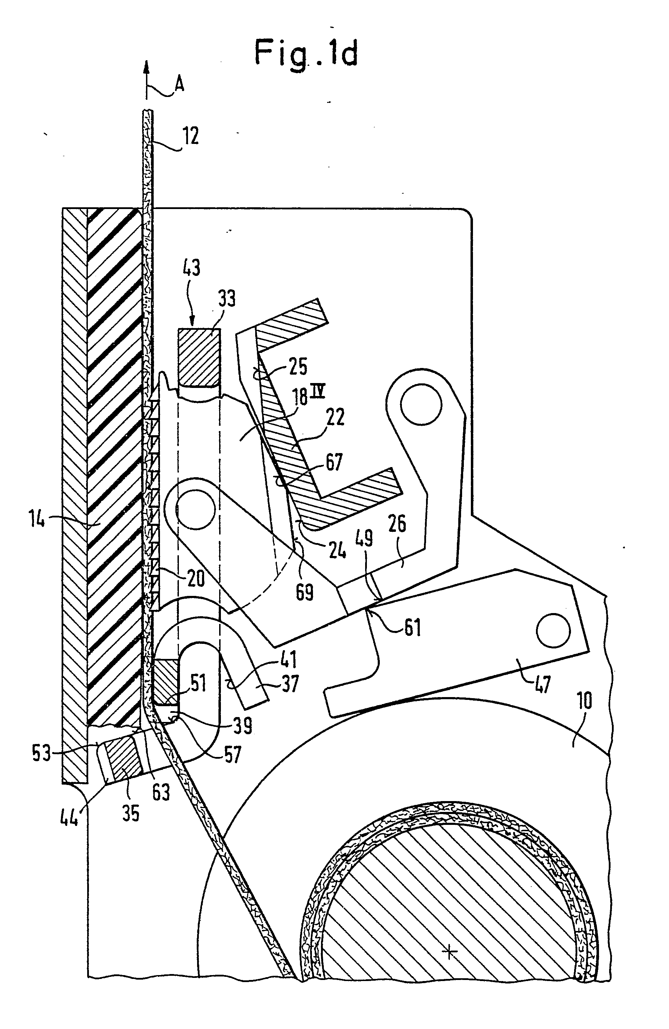

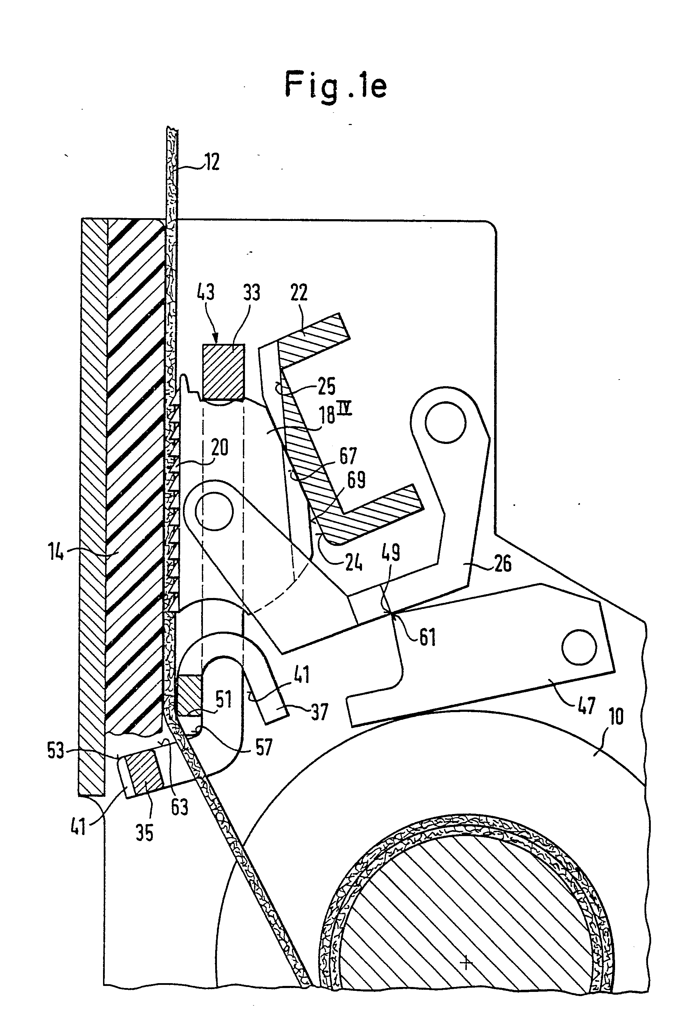

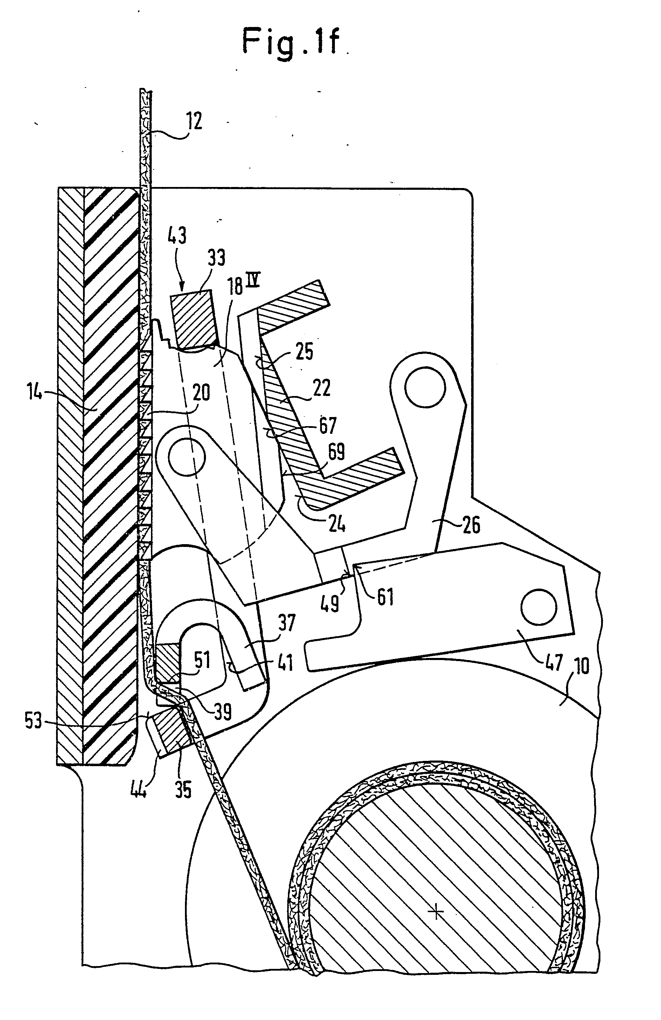

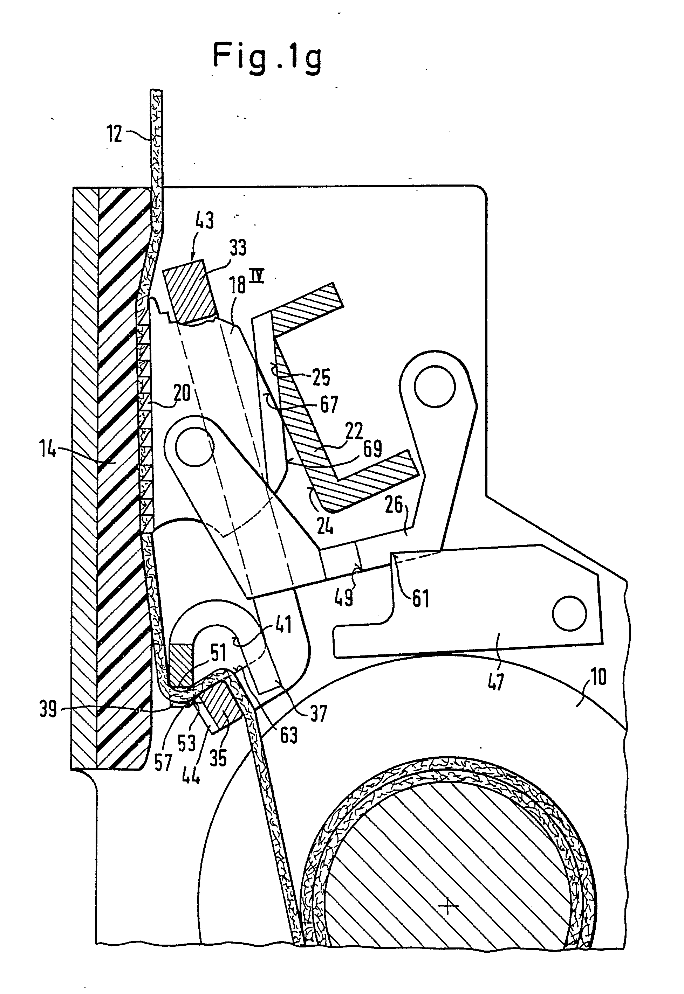

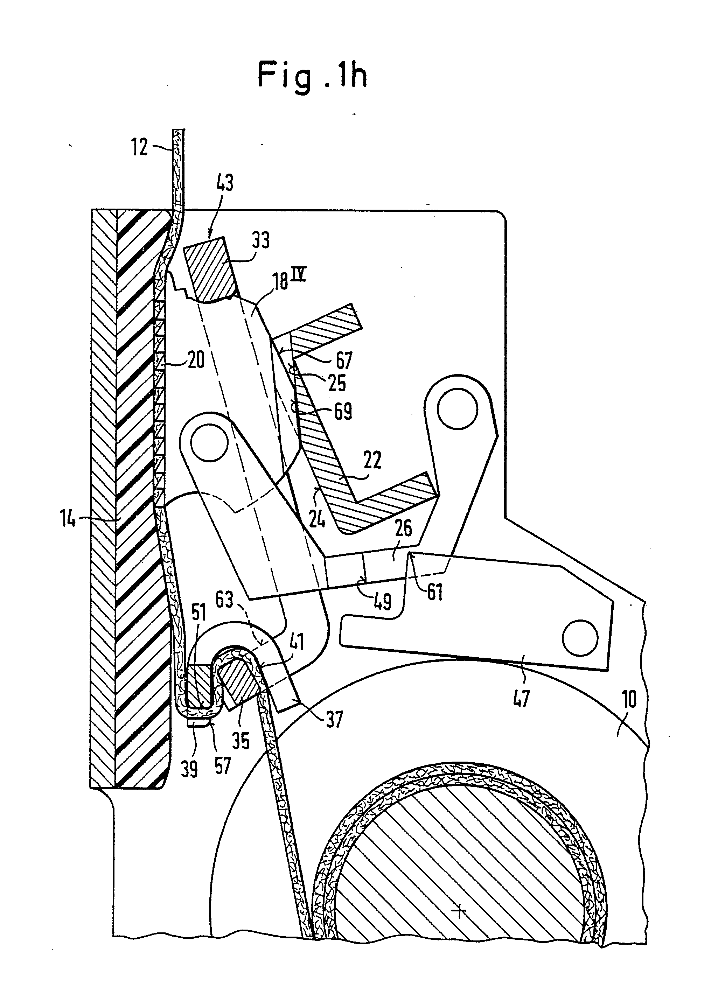

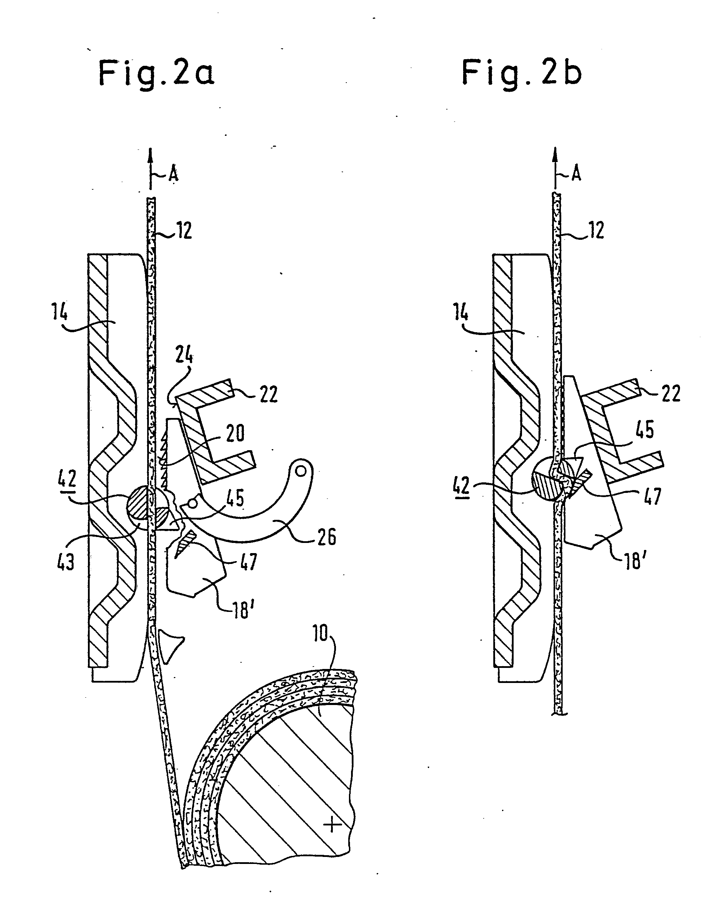

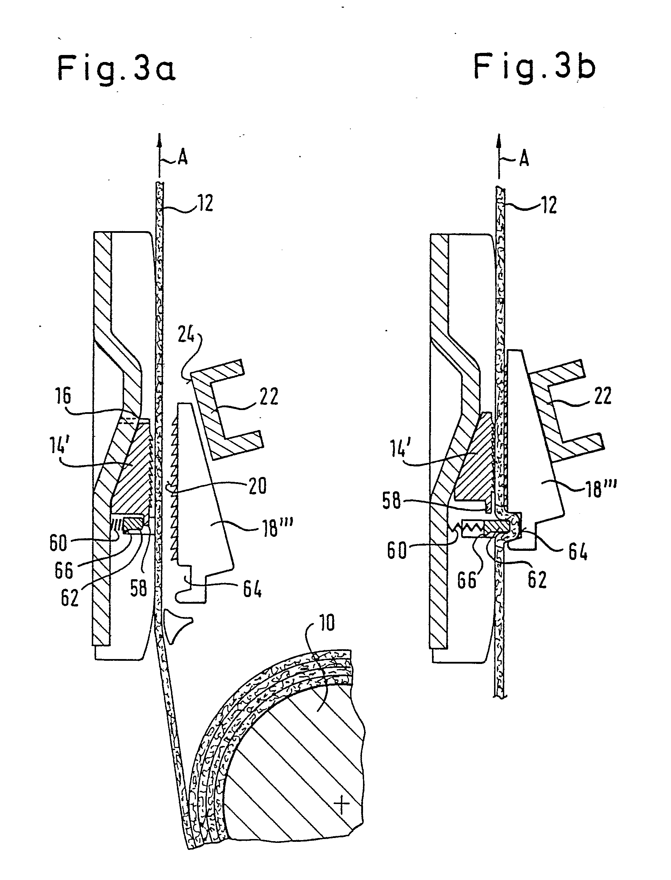

Auf der einen Seite eines in Richtung des Pfeiles (A) von einem Aufroller (10) abzuziehenden Gurtbandes (12) eines Fahrzeug-Sicherheitsgurtsystems befindet sich, gebildet vom Rahmen des Fahrzeugs, eine Klemmgegendruckwange (14), die bei den Ausführungsvarianten gemäß Fig. 1und Fig. 2 stationär und als Klemmgegendruckwange (14') bei der Ausführungsvariante gemäß Fig. 3 nach dem Brechen einer Sollbruchstelle (16) eine bewegliche Klemmgegendruckwange (14') ist. Auf der anderen Seite des Gurtbandes (12) befindet sich ein Klemmkeil (18) (Klemmteil) (Fig. 1), (18') (Fig. 2) bzw. (18''') (Fig. 3). Der Klemmkeil (18, 18', 18'' und 18''') ist mit einer von Zähnen gebildeten Klemmfläche (20) versehen, die einen schonenden erststufigen Klemmeingriff erlaubt. Auf der Seite des Klemmkeils befindet sich eine Gleitschiene (22) mit einer Gleitfläche (24), entlang der der Klemmkeil in Richtung des Pfeiles (A) und in Richtung auf das Gurtband (12) zu zwangsweise gleiten kann, wobei dies nicht für den gesamten Bewegungsweg des Klemmkeils erfolgen muß, insbesondere wenn der Klemmkeil mittels eines Hebels (26) durch irgendeine Kraft angetrieben bewegbar ist, wie dieser in Fig. 1 und 2 dargestellt ist. Dieser Hebel ist in Richtung auf die Gleitschiene konkav gekrümmt ausgebildet, damit der Hebel über einen größeren Bewegungsweg nicht durch die Gleitschiene behindert ist. Entsprechend der Darstellung in Fig. 1 ist, was in Fig. 1b dargestellt ist, der Hebel lösbar mit dem Klemmkeil verbunden, so daß ab einer bestimmten Bewegungsstrecke des Klemmkeils sich die Verbindung zwischen Klemmkeil und Hebel lösen kann.

Die Ausführungsvariante gemäß Fig. 1a kennzeichnet sich aus durch eine ergänzte Zugstrebe (30), die mit einer Ausnehmung (28) versehen ist, durch die das Gurtband (12) verläuft, so daß sich auf der Seite des Klemmkeils ein Teil (32) der Zugstrebe und auf der anderen Seite ein anderer Teil (34) der Zugstrebe befindet. In diesem Bereich befindet sich stationär auch eine Gleitführung (36) mit einer Gleitfläche (38) für das weitere Teil (34) der Strebe. Entsprechend der Darstellung in Fig. 1b ist diese Gleitfläche zur Richtung (A) in einem Winkel ($\beta$) angeordnet. Die Gleitfläche (24) der Gleitschiene (22) befindet sich zur Richtung (A) in einem Winkel ($\alpha$). Diese Winkel sind so eingestellt, daß in der zweiten Klemmstufe eine automatische Deblockierung nicht mehr möglich ist. Vorzugsweise ist der Winkel ($\beta$) größer gleich ($\alpha$). Die Gleitfläche (38) ist so ausgerichtet, daß sich das weitere Teil (34) der Zugstrebe (30) in Richtung des Pfeiles (A) und auf das Gurtband (12) zu bewegen kann, wenn die Zugstrebe entsprechend dem Pfeil (B) bewegt wird.

Die Funktionsweise dieser Ausführungsvariante wird nun beschrieben.

Ausgelöst durch eine bestimmte Krafteinwirkung, insbesondere aufgrund einer Verzögerung oder Beschleunigung des Fahrzeuges in irgendeiner Richtung, erfaßt durch einen Sensor, bewegt sich bereits bei normalen Verzögerungen ab 0,45 g fahrzeugsensitiv und 1,5 g gurtbandsensitiv der Klemmkeil (18) entlang der Gleitführung (24) der Gleitschiene (22) oder aber zunächst geführt durch den Hebel (26) in Richtung des Pfeiles (B) und auch auf das Gurtband zu, bis die Klemmfläche (20) mit dem Gurtband in Berührung gerät und dann das Gurtband mit relativ geringen Abzugskräften eine erststufige Klemmung des Gurtbandes zwischen der Klemmfläche (20) des Klemmkeiles (18) und der Gegendruckwange (14) bewirkt, wobei die Klemmfläche so ausgebildet ist, daß bei derartigen, sehr häufig auftretenden Klemmungen das Gurtband schonend behandelt und somit nicht beschädigt wird. Bei dieser Bewegung bleibt der Klemmkeil (18) frei von dem einen Teil (32) der Zugstrebe (30). Diese Klemmung erfolgt bei einer Kraft in Richtung des Pfeiles (A) bis zu 7 KN, im wesentlichen nur aufgrund eines Kraftschlusses.

Wenn in Richtung des Pfeiles (A) das Gurtband (12) mit einer größeren Kraft von mehr als 15 KN abgezogen wird, so bewegt sich der Klemmkeil nicht nur entlang der vorgenannten ersten Wegstrecke, sondern auch entlang einer sich anschließenden weiteren Wegstrecke derart, daß der obere Rand (40) des Klemmkeiles (18) das eine Teil (32) (Klemmglied) der Zugstrebe (30) in Richtung des Pfeiles (B) mitnimmt. Dies hat zur Folge, daß sich der weitere Teil (34) der Zugstrebe (30) entlang der Gleitfläche (38) der Gleitführung (36) in Richtung auf das Gurtband bewegt, bis es im Verhältnis zum Klemmkeil (18) die in Fig. 1b dargestellte Stellung einnimmt, in der das Gurtband S-förmig verformt ist und somit nicht nur durch Kraftschluß, sondern auch durch Formschluß eine Klemmung des Gurtbandes für den Crash-Fall erfolgt, ohne daß eine Gefahr der Deblockierung besteht.

Nunmehr wird die Ausführungsvariante gemäß Fig. 1c bis Fig. 1h beschrieben. Diese Ausführunsvariante unterscheidet sich von der der Fig. 1a und 1b dadurch, daß das Gurtband nicht zwischen dem weiteren Teil (35) und dem Klemmkeil (18$^{IV}$) eingeklemmt wird, sondern zwischen dem weiteren Teil (35) der Zugstrebe (43) und einem gesonderten, ausgebildeten ortsfesten Gegendruckteil (37), welches mit einer im wesentlichen V-förmigen, in Zugrichtung der Zugstrebe sich verjüngenden Ausnehmung (41) versehen ist. Außerdem ist die Einlaufkante des Gegendruckteils (37) mit zwei Vorsteuernocken (39) versehen, die so seitlich außerhalb des Gurtbandes liegen, daß das Gurtband von diesen Vorsteuernocken (39) seitlich begrenzt ist, wenn sich das Gurtband bei dem Verformungsvorgang gemäß Fig. 1e um die Einlaufkante (51) sich bewegt und dabei von den Vorsteuernocken (39) seitlich begrenzt wird. Auf der gleichen Höhe wie die Vorsteuernocken (39) befinden sich an einer Seite des zusätzlichen Teils (35) der Zugstrebe (43) mit einer Einlaufrundung (53) Vorsprünge (44), die bei der Einschwenkbewegung des zusätzlichen Teils (35) der Zugstrebe (43) in die Ausnehmung (41) an der Außenkante der Vorsteuernocken (39) entlanggleiten können, wozu diese Vorsteuernocken ebenfalls mit einer Rundung (57) versehen sind, um einen glatten Übergang zu gewährleisten.

Der Klemmvorgang wird nun anhand der Fig. 1c bis 1h beschrieben. In der in Fig. 1c dargestellten Ruhestellung kann das Gurtband (12) sich frei zwischen dem Gegendruckteil (37) und der Gegendruckwange (14) und dem Klemmkeil (18$^{IV}$) bewegen. Wenn nun beispielsweise, ausgelöst durch die Hubbewegung des Aufrollautomaten (10), der Steuerbügel (47) in Fig. 1c im Uhrzeigersinn gedreht wird, so wird der Schwenkhebel (26) zusammen mit dem Klemmkeil (18$^{IV}$) ebenfalls im Uhrzeigersinn verschwenkt, mit der Folge, daß sich der Klemmkeil entlang einer ersten Wegstrecke in Richtung auf das Gurtband (12) bewegt, und zwar zwangsgesteuert durch die Gleitfläche (24) der Gleitschiene (22). Sobald die gezahnte Greiffläche des Klemmkeils mit dem Gurtband in Berührung gelangt, so verstärkt der Gurtbandabzug automatisch den Klemmeingriff und verursacht die weitere Bewegung des Klemmkeils. Dieser Vorgang des ersten Klemmeingriffes ist in Fig. 1d und 1e dargestellt.

Ein erststufiger Klemmeingriff gemäß Fig. 1d erfolgt im Bereich von 0 bis ungefähr 1,2 KN, wobei das Ende der ersten Klemmstufe in Fig. 1e dargestellt ist. In dieser Stellung befindet sich eine Sprungkante (61) unmittelbar am Gleitflächensprung (49) des Schwenkhebels (26), so daß bei einer weiteren Belastung des Gurtbandes entsprechend der Darstellung in Fig. 1f eine plötzliche weitere Hubbewegung des Aufrollautomaten (10) frei wird und somit eine Entspannung des Gurtbandes im Bereich zwischen dem Klemmkeil und dem Aufrollautomaten hervorruft.

Wenn, wie bei der Ausführungsvariante der Fig. 1a, 1b, die zweite Wegstrecke eingeleitet wird und der Klemmkeil gegen die Zugstrebe drückt, um diese mitzunehmen, so bewirkt die Winkelanstellung des zusätzlichen Teils (35) der Zugstrebe (43) ein Entlanggleiten der Kante (63) entlang den Vorsteuernocken (39), so daß sich das zusätzliche Teil entlang einem ganz bestimmten Einsteuerweg in die Ausnehmung (41) des Gegendruckteils (37) bewegen kann, wie dies der Fig. 1f, Fig. 1g und Fig. 1h deutlich entnommen werden kann, wobei einerseits ein Einklemmen des Gurtbandes zwischen der Einlaufkante (51) des Gegendruckteils (37) und dem zusätzlichen Teil (35) der Zugstrebe (43) und andererseits eine Behinderung an der Einlaufkante dahingehend verhindert werden kann, daß ein ungehinderter Verformungsvorgang des Gurtbandes in die Ausnehmung (41) erfolgen kann.

Wie Fig. 1c bis 1h entnommen werden kann, weist die Gleitschiene (22) hinter der Gleitfläche (24) eine Folgegleitfläche (25) auf, die in einem kleineren Winkel ($\gamma$) zur Abzugsrichtung A des Gurtbandes (12) liegt als die Gleitfläche (24) mit ihrem Winkel ($\alpha$) (Fig. 1c). Mit der Gleitfläche (24) der Gleitschiene (22) wirkt eine Gleitfläche (67) des Klemmkeils (18$^{IV}$) zusammen, die entsprechend ausgerichtet ist. An diese Gleitfläche (67) schließt sich eine Folgegleitfläche (69) an, die entsprechend der Folgegleitfläche (25) ausgerichtet ist. Dies hat zur Folge, daß nach einem bestimmten Bewegungsweg die Folgegleitflächen (69 und 25) miteinander in Eingriff gelangen und dann der Klemmkeil (18$^{IV}$) mit einer kleineren Bewegungskomponente auf das Gurtband zu und mit einer größeren Bewegungskomponente parallel zur Abzugsrichtung A des Gurtbandes bewegt wird. Dies hat zur Folge, daß insbesondere während der zweiten Wegstrecke für den Klemmeingriff für den Crash-Fall durch den Klemmkeil (18$^{IV}$) eine vermindert zunehmende Klemmkraft aufgebracht wird, um so vermeiden, daß das Gurtband an dieser Stelle soweit beschädigt wird, daß es keine ausreichende Haltekraft mehr hat.

Bevorzugt ist das zusätzliche Teil (35) der Zugstrebe (43) als Vierkantschiene ausgebildet, die so zur übrigen Strebe ausgerichtet ist (Winkelabbiegung), daß in der Endphase des Verformungs-Klemmeingriffes, wie er in Fig. 1h dargestellt ist, im wesentlichen nur zwei Kanten des als Schiene ausgebildeten zusätzlichen Teils eine Klemmung des Gurtbandes im Bereich der Ausnehmung (41) gegen das Gegendruckteil (37) vornimmt.

Der Zustand in Fig. 1f entspricht einer Kraftaufbringung von ca. 6 KN, die Stellung in Fig. 1g einer Kraftaufbringung von ca. 12 KN, und die Stellung in Fig. 1h der Aufbringung einer Kraft von mehr als 13 KN.

Der Winkel $\gamma$ beträgt vorzugsweise 5° und der Winkel $\alpha$ vorzugsweise 24°.

Die Ausführungsvariante gemäß Fig. 2 unterscheidet sich von der gemäß Fig. 1 dadurch, daß anstatt der Zugstrebe (32) eine Welle (42) vorgesehen ist, in der sich eine Ausnehmung (46) befindet, durch die das Gurtband (12) verläuft und in der Ausgangsstellung frei bewegbar ist. Diese Welle ist mit einer Nase (45) versehen, die bei einer Bewegung des Klemmkeils (18') im wesentlichen in Richtung des Pfeiles (A) von einem Mitnehmer (47) des Klemmkeils (18') mitgenommen wird, so daß sich, dadurch eingeleitet, die Welle (42) dreht und dabei in der in Fig. 2b dargestellten Stellung das Gurtband S-förmig verformt, nachdem sich der Klemmkeil (18') entlang der weiteren Wegstrecke bewegt hat, d.h. beim Aufbringen einer Gurtbandzugkraft in Richtung des Pfeiles (A) von mehr als 15 KN (Crash-Fall). Bei den erwähnten erststufigen Klemmungen wird die Welle nicht gedreht, und die Klemmfläche (20) klemmt schonend auf die gleiche Weise, wie dies im Zusammenhang mit dem Ausführungsbeispiel der Fig. 1 bereits beschrieben worden ist.

Es sei an dieser Stelle erwähnt, daß natürlich in der ersten Klemmstufe stets ein automatisches Deblockieren erfolgt, wenn die Gurtbandabzugskraft nachläßt.

Eine letzte Ausführungsvariante ergibt sich aus Fig. 3a und 3b. Die Klemmgegendruckwange (14') ist über eine Sollbruchstelle (16) (bricht ab 4 KN) mit dem Rahmen befestigt und so lange stationär. Diese Klemmgegendruckwange (14') ist zugleich als Riegelteil ausgebildet, welches mit einer Verriegelungsnase (58) ein in Richtung auf das Gurtband (12) durch eine Feder (60) vorgespanntes Klemmglied (62) in der Normalstellung zurückhält. Bei einer normalen Gurtbandabzugskraft bis ca. 4 KN erfolgt nur die erststufige schonende Klemmung mit einer automatischen Deblockierung nach dem Nachlassen der Gurtbandabzugskraft. Erst wenn höhere Kräfte auftreten, bricht die Sollbruchstelle (16) und das Riegelteil (14') entriegelt das Klemmglied (62), so daß dieses sich aufgrund des Drucks der Feder (60) in Richtung auf das Gurtband bewegen kann. Zu diesem Zeitpunkt befindet sich der Klemmkeil (18''') bereits in der Stellung der Fig. 3b und befindet sich mit einer Ausnehmung (64) auf der Höhe des Klemmglieds (62), so daß dieses aufgrund der Feder (60) sich unter Verformung des Verlaufs des Gurtbandes in die Ausnehmung (64) bewegen kann. Dieser Zustand ist in Fig. 3b dargestellt. Eine Deblockierung aus diesem Zustand ist nicht möglich. Das Klemmglied (62) kann natürlich auch außerhalb des Klemmkeils wirksam sein und auch durch einen anderen Riegel ver- bzw. entriegelt werden, der nicht mit einer beweglichen Gegendruckwange verbunden ist.

Damit ein schneller Kraftschluß entsteht, ist der in Fig. 3b dargestellte Winkel für das Riegelteil (14') größer als 0. Ein kleiner Haken (66) am hinteren Ende des Klemmglieds (62) verhindert bei steigender Last eine Rückwärtsbewegung des Klemmglieds und somit eine ungewollte Deblockierung.

## Ansprüche

1. Zweistufig wirksame Klemmeinrichtung für ein Sicherheitsgurtsystem, mit einer schonend wirkenden, nicht selbsthemmenden ersten Klemmfläche eines Klemmteils und einer im Crash-Fall wirkenden, den Verlauf des Gurtbandes verformenden zweiten Klemmfläche, wobei die erste Klemmfläche über eine erste Wegstrecke in die - schonende Klemmanlage an das Gurtband und die zweite Klemmfläche über eine zweite Wegstrecke, angetrieben durch eine erhöhte Gurtzugkraft im Crash-Fall, in ihre Klemmlage gelangt, dadurch gekennzeichnet, daß das Klemmteil (18; 18'; 18$^{IV}$) nach Anlage an das Gurtband (12) von diesem mitbewegt wird, und daß die zweite Klemmfläche an einem eigenständigen Klemmglied (34; 35; 42) ausgebildet ist, wobei das Klemmteil am Ende der ersten Wegstrecke mit dem Klemmglied in Anlage kommt, so daß das Klemmglied über die zweite Wegstrecke von dem Klemmteil bewegt wird.

2. Klemmeinrichtung nach Anspruch 1, dadurch gekennzeichnet, daß das Klemmglied als Teil einer Zugstrebe (30) ausgebildet ist, durch die das Gurtband (12) verläuft, so daß ein mit dem Klemmteil (18) am Ende dessen erster Wegstrecke in Berührung gelangender Teil (32) der Zugstrebe (30) auf derselben Seite des Gurtbandes (12) sich befindet wie das Klemmteil (18), und so daß das Klemmglied (34) sich auf der anderen Seite des Gurtbandes (12) befindet und derart in Richtung auf das Gurtband und das Klemmteil (18) zwangsgeführt ist, daß eine Verformung des Gurtbandes im Klemmeingriff zwischen dem Klemmteil (18) und dem Klemmglied (34) erfolgt, wenn sich Zugstrebe und Klemmteil (18) über die zweite Wegstrecke bewegen.

3. Klemmeinrichtung nach Anspruch 1, dadurch gekennzeichnet, daß das Klemmglied als Teil einer Zugstrebe (43) ausgebildet ist, durch die das Gurtband (12) verläuft, so daß ein mit dem Klemmteil (18$^{IV}$) am Ende dessen erster Wegstrecke in Berührung gelangender Teil (33) der Zugstrebe (43) auf derselben Seite des Gurtbandes (12) sich befindet wie das Klemmteil (18), so daß das Klemmglied (35) der Zugstrebe sich auf der anderen Seite des Gurtbandes (12) befindet und derart in Richtung auf ein gesondertes, ortsfestes Gegendruckteil (37) zwangsgeführt ist, daß eine Verformung des Gurtbandes im Klemmeingriff zwischen dem Gegendruckteil (37) und dem Klemmglied (35) der Zugstrebe erfolgt, wenn sich die Zugstrebe und das Klemmteil (18$^{IV}$) über die zweite Wegstrecke bewegen.

4. Klemmeinrichtung nach Anspruch 2, dadurch gekennzeichnet, daß das Klemmglied (34) der Zugstrebe (30) entlang einer stationären Gleitführung (36) bewegbar ist, die in einem Winkel ($\beta$) zur Gurtbandabzugsrichtung in diese Richtung und auf das Gurtband zu verläuft.

5. Klemmeinrichtung nach einem der Ansprüche 1 bis 4, dadurch gekennzeichnet, daß das Klemmteil (18; 18$^{IV}$) als ein zumindest für die zweite Wegstrecke entlang einer Gleitschiene (22) bewegbarer Klemmkeil ausgebildet ist.

6. Klemmeinrichtung nach Anspruch 4 und 5, dadurch gekennzeichnet, daß der Winkel ($\beta$) zwischen der Gurtbandverlaufsrichtung (A) und der Gleitfläche (38) der Gleitführung (36) größer oder gleich dem Winkel ($\alpha$) zwischen der Gurtbandverlaufsrichtung (A) und einer Gleitfläche (24) der Gleitschiene (22) ist.

7. Klemmeinrichtung nach Anspruch 5, dadurch gekennzeichnet, daß die Gleitschiene (22) eine 2-stufige Gleitfläche dahingehend hat, daß sich in Abzugsrichtung des Gurtbandes eine Folgegleitfläche (25) anschließt, die in einem Winkel ($\gamma$) zur Abzugsrichtung des Gurtbandes liegt, der kleiner als der Winkel ($\alpha$) zwischen der Gleitfläche (24) und der Abzugsrichtung des Gurtbandes ist, und daß entsprechend angepaßt auch die korrespondierende Gleitfläche des Klemmteils (18$^{IV}$) 2-stufig ist.

8. Klemmeinrichtung nach Anspruch 3, dadurch gekennzeichnet, daß das gesonderte ortsfeste Gegendruckteil (37) seitlich außerhalb des Verformungsweges des Gurtbandes (12) mindestens einen Vorsteuernocken (39) aufweist, an dem das Klemmglied (35) der Zugstrebe (43) während der Gurtbandverformung ohne Einklemmen des Gurtbandes entlanggleiten kann.

9. Klemmeinrichtung nach Anspruch 3, dadurch gekennzeichnet, daß das Gegendruckteil (37) eine Ausnehmung (41) bildet, die das Klemmglied (35) der Zugstrebe (43) zusammen mit dem verformten Gurtband formschlüssig aufnimmt.

10. Klemmeinrichtung nach Anspruch 3 und 8, dadurch gekennzeichnet, daß das Klemmglied (35) der Zugstrebe (43) seitlich außerhalb des Verformungsweges des Gurtbandes (12) seitlich des Gurtbandes vorstehende Nocken (44) hat, die für das Verhindern eines Einklemmens des Gurtbandes während des Verformungsvorganges mit dem Vorsteuernocken (39) zusammenwirken.

11. Klemmeinrichtung nach Anspruch 1, dadurch gekennzeichnet, daß das Klemmglied als ein im Gehäuse drehgelagertes Teil (42) ausgebildet ist, durch welches das Gurtband (12) verläuft, und daß dieses Teil während der zweiten Wegstrecke des Klemmteils (18') durch dieses bei Verformung des Gurtbandes (12) drehbar ist.

12. Klemmeinrichtung nach Anspruch 11, dadurch gekennzeichnet, daß das drehgelagerte Teil (42) einen Mitnahmeanschlag (45) aufweist, der mit einem Mitnehmer (47) des Klemmteils (18') bewegt wird.

13. Zweistufig wirksame Klemmeinrichtung für ein Sicherheitsgurtsystem, mit einer schonend wirkenden, nicht selbsthemmenden ersten Klemmfläche eines Klemmteils und einer im Crash-Fall wirkenden, den Verlauf des Gurtbandes verformenden zweiten Klemmfläche, wobei die erste Klemmfläche über eine erste Wegstrecke in die - schonende Klemmanlage an das Gurtband und die zweite Klemmfläche über eine zweite Wegstrecke, angetrieben durch eine erhöhte Gurtzugkraft im Crash-Fall, in ihre Klemmlage gelangt, dadurch **gekennzeichnet,** daß das Klemmglied (18‴) als ein im wesentlichen senkrecht zur Gurtbandverlaufsrichtung (A) durch eine Feder (60) in Richtung auf das Gurtband vorgespanntes Teil (62) ausgebildet ist, das in der unwirksamen Ausgangslage durch ein Riegelteil (14′) verriegelt ist, und daß das Riegelteil (14′) am Ende der zweiten Wegstrecke des Klemmteils (18‴) entriegelt wird, so daß das Klemmglied (62) das Gurtband verformend mit dem Klemmteil (18‴) in Eingriff bringbar ist.

14. Klemmeinrichtung nach Anspruch 13, dadurch **gekennzeichnet,** daß das Riegelteil (14′) von einer in Gurtbandauszugsrichtung (A) bewegbaren Gegendruckwange für das Klemmteil (18‴) gebildet ist.

15. Klemmeinrichtung nach Anspruch 14 oder 15, dadurch **gekennzeichnet,** daß in dem Klemmteil (18‴) eine Ausnehmung (64) ausgebildet ist, in die das Klemmglied (62) zusammen mit einem Abschnitt verformten Gurtbandes (12) eingreift.

16. Klemmeinrichtung nach einem der Ansprüche 1 bis 15, dadurch **gekennzeichnet,** daß während der Herstellung der Klemmlage des Klemmgliedes (34, 35; 42; 62) auf der Seite des Gurtbandaufrollers (10) eine Lockerung des Gurtbandes durchführbar ist.

17. Klemmeinrichtung nach Anspruch 16, dadurch **gekennzeichnet,** daß ein Aufroll-Hubautomat (10) vorgesehen ist, durch den eine Hubbewegung der Wickelwelle im gesperrten Zustand ausgenutzt wird, über einen Steuerbügel (47) das Klemmteil (18) in Klemmanlage an das Gurtband zu bringen, aufgrund eines Gleitflächensprunges (49) zwischen dem Steuerbügel (47) und dem ersten Klemmelement (18) eine weitere Hubbewegung freigegeben wird.

# Fig.1a

# Fig.1b

# Fig.1c

0 292 876

Fig.1d

# Fig.1e

## Fig.1f

Fig.1g

# Fig.1h

Fig.2a

Fig.2b

# Fig.3a

# Fig.3b

Europäisches
Patentamt

EUROPÄISCHER RECHERCHENBERICHT

Nummer der Anmeldung

EP 88 10 8041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 570 975 (KAWAGUCHI et al.) * Anspruch 1; Figuren 2,4 * --- | 1 | B 60 R 22/42 |
| D,A | DE-A-2 259 692 (DAIMLER-BENZ AG) * Anspruch 1; Figur * ----- | 1 | |

RECHERCHIERTE
SACHGEBIETE (Int. Cl.4)

B 60 R

Der vorliegende Recherchenbericht wurde für alle Patentansprüche erstellt

| Recherchenort | Abschlußdatum der Recherche | Prüfer |
|---|---|---|
| DEN HAAG | 29-08-1988 | MAUSSER, T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)